# EUROPEAN PATENT APPLICATION

(11) **EP 4 769 952 A1**
(43) Date of publication of application: **01.07.2026**
(21) Application number: 25226279.5
(22) Date of filing: 22.12.2025
(51) Int. Cl.: H04B 1/00

(54) **RADIO FREQUENCY FRONT-END DEVICE, RADIO FREQUENCY SYSTEM, AND ELECTRONIC DEVICE**

(30) Priority: 30.12.2024 CN 202411986460
(71) Applicant: GUANGDONG OPPO MOBILE TELECOMMUNICATIONS CORP., LTD., Dongguan, Guangdong 523860 (CN)
(72) Inventor: CHEN, Feng, No.18 Haibin Road Wusha,Chang'an,Dongguan Guangdon, 523860 (CN); TONG, Lin, No.18 Haibin Road Wusha,Chang'an,Dongguan Guangdon, 523860 (CN)
(74) Representative: Penza, Giancarlo

(57) **Abstract**

The disclosure related to a RF front-end device, a RF system and an electronic device. The RF front-end device is configured with an antenna terminal, a control terminal for receiving multiple control signals, and multiple input terminals for receiving multiple RF signals. The RF front-end device includes: a first switch unit having multiple first terminals connected to the multiple input terminals respectively; a power amplification unit, having an input terminal connected to a second terminal of the first switch unit, and an output terminal connected to the antenna terminal; and a control unit, where the control unit is connected to each of the control terminal and the power amplification unit, and is configured to control, based on a received target control signal, the power amplification unit to perform power amplification processing on a received target RF signal. The target control signal is one of the multiple control signals, and frequency bands of the multiple RF signals are different. This can increase the multiplexing efficiency of the power amplifier unit, enhance the integration level of RF front-end device, and achieve a low cost.

## Description

### TECHNICAL FIELD

The disclosure relates to the field of power supply technologies, and in particular to a radio frequency (RF) system and an electronic device.

### BACKGROUND

As communication technology develops rapidly, mobile terminals support more and more communication standards and frequency bands. Consequently, the mobile terminals have multiple transmission paths between a radio frequency chip(s) and antennas to support transmitting radio frequency signals of different frequency bands.

In the related art, multiple power amplifiers are generally provided to support power amplification processing of radio frequency signals of different frequency bands. For example, one power amplifier may be configured for the radio frequency signal of each frequency band, resulting in a high cost and a large occupied space.

### SUMMARY

Embodiments of the disclosure provide a radio frequency front-end device, a radio frequency system, and an electronic device, by which a power amplification unit can be reused, and a low cost and a small occupied space are enabled. The invention is set out in the appended set of claims.

In the radio frequency front-end device, the radio frequency system, and the electronic device mentioned above, the radio frequency front-end device is configured with the antenna terminal, the control terminal, and the multiple input terminals. Specifically, the radio frequency front-end device includes the first switch unit, the power amplification unit, and the control unit. The multiple first terminals of the first switch unit are connected to the input terminals of the radio frequency front-end device respectively. The second terminal of the first switch unit is connected to the input terminal of the power amplification unit. The output terminal of the power amplification unit is connected to the antenna terminal. The first switch unit may be switched to selectively output the radio frequency signal of any frequency band to the power amplification unit. Under the control of the control unit, the power amplification unit may support power amplification for any radio frequency signal. Compared with the related art which requires to configure one power amplification unit for the radio frequency signal of each frequency band to support the power amplification of the radio frequency signal of each frequency band, in the radio frequency front-end device provided by the embodiments of the disclosure, the multiple radio frequency signals may reuse the same power amplification unit, which has low cost and can also reduce the occupied space of the radio frequency front-end device.

### BRIEF DESCRIPTION OF THE DRAWINGS

In order to more clearly illustrate technical solutions in the embodiments of the disclosure, drawings to be used in the embodiments are briefly described below. Apparently, the following drawings are merely some embodiments of the disclosure, and a person skilled in the art can obtain other drawings according to these drawings without paying any creative effort.
FIG. 1 is a first schematic framework diagram of a radio frequency front-end device according to some embodiments.
FIG. 2 is a first schematic framework diagram of a radio frequency system according to some embodiments.
FIG. 3 is a second schematic framework diagram of the radio frequency front-end device according to some embodiments.
FIG. 4 is a third schematic framework diagram of the radio frequency front-end device according to some embodiments.
FIG. 5 is a fourth schematic framework diagram of the radio frequency front-end device according to some embodiments.
FIG. 6 is a fifth schematic framework diagram of the radio frequency front-end device according to some embodiments.
FIG. 7 is a sixth schematic framework diagram of the radio frequency front-end device according to some embodiments.
FIG. 8 is a seventh schematic framework diagram of the radio frequency front-end device according to some embodiments.
FIG. 9 is an eighth schematic framework diagram of the radio frequency front-end device according to some embodiments.
FIG. 10 is a ninth schematic framework diagram of the radio frequency front-end device according to some embodiments.
FIG. 11 is a tenth schematic framework diagram of the radio frequency front-end device according to some embodiments.
FIG. 12 is a second schematic framework diagram of the radio frequency system according to some embodiments.
FIG. 13 is an eleventh schematic framework diagram of the radio frequency front-end device according to some embodiments.
FIG. 14 is a twelfth schematic framework diagram of the radio frequency front-end device according to some embodiments.
FIG. 15 is a thirteenth schematic framework diagram of the radio frequency front-end device according to some embodiments.
FIG. 16 is a third schematic framework diagram of the radio frequency system according to some embodiments.
FIG. 17 is a fourth schematic framework diagram of the radio frequency system according to some embodiments.
FIG. 18 is a fifth schematic framework diagram of the radio frequency system according to some embodiments.
FIG. 19 is a sixth schematic framework diagram of the radio frequency system according to some embodiments.
FIG. 20 is a seventh schematic framework diagram of the radio frequency system according to some embodiments.
FIG. 21 is an eighth schematic framework diagram of the radio frequency system according to some embodiments.
FIG. 22 is a ninth schematic framework diagram of the radio frequency system according to some embodiments.
FIG. 23 is a schematic framework diagram of an electronic device according to some embodiments.

### DETAILED DESCRIPTION OF PREFERRED EMBODIMENTS

To facilitate understanding of the disclosure, the disclosure will be described comprehensively below with reference to the drawings. The drawings illustrates some embodiments of the disclosure. However, the disclosure may be implemented in many different forms and is not limited to the embodiments described herein. Rather, the purpose of providing these embodiments is to make the disclosure more thorough and comprehensive

Unless otherwise defined, all technical and scientific terms used herein have the same meaning as commonly understood by a person skilled in the technical field of the disclosure. The terms used herein in the specification of the disclosure are only for the purpose of describing specific embodiments and are not intended to limit the disclosure.

It can be understood that terms "first", "second" and the like used herein is only for the purpose of description, and cannot be understood as indicating or implying relative importance or implicitly indicating the number of indicated technical features. Therefore, the feature defined by "first" or "second" may explicitly or implicitly include at least one of such feature. The terms "first", "second", etc. may be used herein to describe various elements, but these elements are not limited by these terms. These terms are only used to distinguish one element from another. In addition, in the description of the disclosure, "a plurality of" or "multiple" means at least two, such as two, and three, unless otherwise clearly and specifically defined. In the description of the disclosure, "several" means at least one, such as one, and two, unless otherwise clearly and specifically defined.

It is notable that, when an element is considered to be "connected" to another element, the element may be directly connected to the other element, or connected to the other element through an intermediate element. In addition, "connection" in the following embodiments should be understood as "electrical connection" and "communication connection" if there is transmission of electrical signals or data between the connected objects.

As used herein, the singular forms "a/an", "one", and "the" may further include plural forms unless the context clearly indicates otherwise. It should also be understood that the terms "comprise/include" or "have" and the like specify the existence of stated features, entities, steps, operations, components, parts, or combinations thereof, but do not exclude the existence or addition of one or more other features, entities, steps, operations, components, parts, or combinations thereof. In addition, the term "and/or" used herein includes any and all combinations of the related listed items.

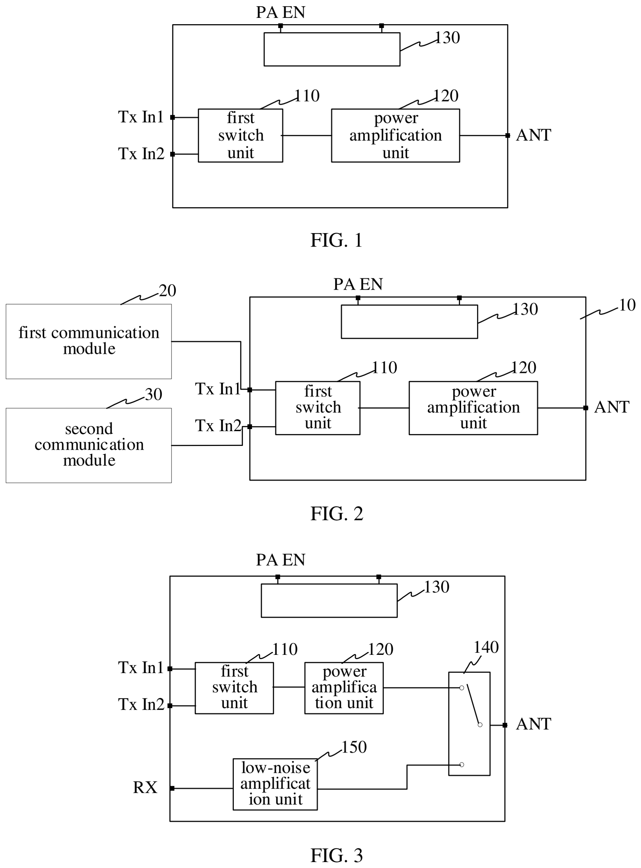

As illustrated in FIG. 1, in some exemplary embodiments of the disclosure, a radio frequency front-end device 10 is provided. The radio frequency front-end device 10 is configured with an antenna terminal ANT for connecting to an antenna, a control terminal (for example, PA EN) for receiving multiple control signals, and multiple input terminals (e.g., Tx In1, Tx In2, etc.) for radio frequency signals.

In the embodiments of the disclosure, the multiple control signals received by the control terminal are different from each other, and frequency bands of the radio frequency signals received by individual input terminals are also different. The radio frequency front-end device according to the embodiments of the disclosure may be applied to a radio frequency system including multiple communication modules. Each communication module may be configured to provide at least one control signal and at least one radio frequency signal. For example, each communication module may be configured to provide a respective control signal to the control terminal of the radio frequency front-end device, and a respective radio frequency signal to the input terminal of the radio frequency front-end device.

The radio frequency front-end device 10 may include a first switch unit 110, a power amplification unit 120, and a control unit 130. Multiple first terminals of the first switch unit 110 are connected to the input terminals of the radio frequency front-end device 10 respectively. A second terminal of the first switch unit 110 is connected to an input terminal of the power amplification unit 120. An output terminal of the power amplification unit 120 is connected to the antenna terminal ANT.

The first switch unit 110 may be configured to make the second terminal conductively connected to any one of the first terminals, so as to output the radio frequency signal received by any input terminal to the power amplification unit 120. Exemplarily, the first switch unit 110 may include a single-pole multi-throw switch (SPnT, where n is a positive integer greater than or equal to 2).

Under the control of the control unit 130, the power amplification unit 120 may be configured to perform power amplification processing on the received radio frequency signal. For example, the power amplification unit 120 may include one power amplifier that is capable of amplifying any of the radio frequency signals.

For another example, the power amplification unit 120 may include at least two cascaded power amplifiers to support multi-stage power amplification processing of any of the radio frequency signals. In the embodiments of the disclosure, the number of stages of the power amplifiers included in the power amplification unit 120 is not limited.

In some exemplary embodiments, the radio frequency front-end device 10 is further configured with at least one power supply terminal. The number of the power supply terminals may be the same as the number of the power amplifiers. Each power supply terminal is connected to a respective power amplifier to receive a power signal provided by an external power supply, thereby supplying power to the corresponding power amplifier.

The control unit 130 is connected to each of the control terminal and the power amplification unit 120, and is configured to control, based on the received target control signal, the power amplification unit to perform power amplification processing on the received radio frequency signal. Specifically, the target control signal is any one of the multiple control signals, and the target radio frequency signal is one of the multiple radio frequency signals. The target control signal corresponds to the target radio frequency signal.

For illustrative purposes, as illustrated in FIG. 2, a case where the multiple control signals include a first control signal and a second control signal, the multiple radio frequency signals include a first radio frequency signal and a second radio frequency signal, and the radio frequency front-end device 10 may be applied to a radio frequency system including a first communication module 20 and a second communication module 30 is taken as an example for description. It is notable that the control terminal for receiving the first control signal and the control terminal for receiving the second control signal may be the same or different. For example, the radio frequency front-end device is configured with a first control terminal for receiving the first control signal and a second control terminal for receiving the second radio frequency signal.

The first communication module 20 may be configured to provide the first control signal and the first radio frequency signal to the radio frequency front-end device 10, and the second communication module 30 may be configured to provide the second control signal and the second radio frequency signal to the radio frequency front-end device 10.

The communication standards of the first radio frequency signal and the second radio frequency signal may be the same or different. Exemplarily, the communication standards may include a cellular communication standard, a Wi-Fi communication standard, and a Bluetooth communication standard. The center frequency of each of the first radio frequency signal and the second radio frequency signal is within a preset range, and the radio frequency front-end device 10 may be configured to perform power amplification processing on the received first radio frequency signal and second radio frequency signal. In the embodiments of the disclosure, it is illustrated by taking a case where the first radio frequency signal is of the cellular communication standard and the second radio frequency signal is of the Wi-Fi communication standard as an example. For example, the first radio frequency signal is an ultra-high-frequency signal, such as an N79 or N78 signal, and the second radio frequency signal is a Wi-Fi 5G signal. Alternatively, the first radio frequency signal is a high-frequency signal, such as an N41 or B41 signal, and the second radio frequency signal is a Wi-Fi 2.4G signal or a Bluetooth signal.

The first communication module 20 may be a cellular communication module, for example, a cellular transceiver. The first communication module 20 may be configured to output the first control signal for controlling the radio frequency front-end device 10, and provide the first radio frequency signal, such as a high-frequency signal or an ultra-high-frequency signal, to the radio frequency front-end device 10.

The second communication module 30 may be a Wi-Fi communication module, for example, the Wi-Fi communication module may include one of a Wi-Fi chip and a WI-FI&BT chip. The second communication module 30 may be configured to output the second control signal for controlling the radio frequency front-end device 10, and provide the second radio frequency signal, such as a Wi-Fi 2.4G signal, a Bluetooth signal, or a Wi-Fi 5G signal, to the radio frequency front-end device 10.

When the first switch unit 110 outputs the first radio frequency signal received by a first input terminal to the power amplification unit 120, the control unit 130 may be configured to operate in a first operating mode based on the received first control signal, and control the power amplification unit 120 to perform, based on the first control signal, power amplification processing on the first radio frequency signal. In this case, the target control signal is the first control signal, and the target radio frequency signal is the first radio frequency signal.

When the first switch unit 110 outputs the second radio frequency signal received by the second input terminal to the power amplification unit 120, the control unit 130 may operate in a second operating mode based on the received second control signal, and control the power amplification unit 120 to perform, based on the second control signal, power amplification processing on the second radio frequency signal. In this case, the target control signal is the second control signal, and the target radio frequency signal is the second radio frequency signal.

The operating parameters of the power amplification unit 120 operating in the first operating mode and in the second operating mode are different, and the operating parameters include but are not limited to an operating voltage and an operating current.

Exemplarily, each control signal may be a MIPI signal or a GPIO signal. The type of the control signal is related to the communication module. For example, when the first communication module 20 is a cellular communication module, the control signal is a MIPI signal. When the communication module is a Wi-Fi communication module, the control signal is a GPIO signal. The type of the control signal is not limited in the embodiments of the disclosure.

In the embodiments of the disclosure, one first switch unit and one power amplification unit are provided. The first switch unit may be switched to selectively output the radio frequency signal of any frequency band to the power amplification unit. Under the control of the control unit, the power amplification unit may support the power amplification of any radio frequency signal. In the related art, one power amplification unit needs to be configured for the radio frequency signal of each frequency band to support the power amplification on the radio frequency signal of each frequency band. In comparison, the radio frequency front-end device according to the embodiments of the disclosure may enable multiple radio frequency signals to reuse the same power amplification unit in the radio frequency front-end device, which has low cost and can also reduce the occupied space of the radio frequency front-end device.

As illustrated in FIG. 3, in some exemplary embodiments, the radio frequency front-end device 10 is further configured with a first output terminal RX. In addition to the first switch unit 110, the power amplification unit 120, and the control unit 130 described in the foregoing embodiments, the radio frequency front-end device 10 may further include a second switch unit 140 and a low-noise amplification unit 150.

Specifically, one first terminal of the second switch unit 140 is connected to the output terminal of the power amplification unit 120, another first terminal of the second switch unit 140 is connected to an input terminal of the low-noise amplification unit 150, and a second terminal of the second switch unit 140 is connected to the antenna terminal ANT. The second switch unit 140 may be configured to selectively make the antenna terminal ANT to be conductively connected to the power amplification unit 120 or the low-noise amplification unit 150. Exemplarily, the second unit may include a single-pole double-throw switch.

An output terminal of the low-noise amplification unit 150 is connected to the first output terminal RX. The low-noise amplifier may support low-noise amplification of the received radio frequency signal to improve receiving performance for the received radio frequency signal. In the embodiments of the disclosure, the signal received by the low-noise amplifier may include a signal that is capable of being processed by the second communication module 30, such as at least one of a Wi-Fi signal (Wi-Fi 2.4G signal or Wi-Fi 5G signal) and a Bluetooth signal.

In the embodiments of the disclosure, a case where the first communication module 20 is a cellular module, the first radio frequency signal is a cellular signal, the second communication module 30 is a Wi-Fi chip, and the second radio frequency signal is a Wi-Fi signal is taken as an example for description.

The first output terminal RX of the radio frequency front-end device 10 may be connected to the second communication module 30. The low-noise amplification unit 150 may be configured to support low-noise amplification processing of the received second radio frequency signal, and output a processed second radio frequency signal to the second communication module 30. Thus, the radio frequency front-end device 10 according to the embodiments may be understood as a Wi-Fi FEM device. When the second radio frequency signal is a Wi-Fi 2.4G signal, the radio frequency front-end device 10 may be a Wi-Fi 2.4G FEM device. When the second radio frequency signal is a Wi-Fi 5G signal, the radio frequency front-end device 10 may be a Wi-Fi 5G FEM device.

By providing the first switch unit and the control unit, the radio frequency front-end device may not only support the receiving and transmitting processing of Wi-Fi signals, but also support the power amplification of cellular signals to realize the transmitting processing of cellular signals. For example, the radio frequency front-end device may support transmitting and receiving Wi-Fi 2.4G signals and the transmitting processing of N41/B41 or N40/B40. Alternatively, the radio frequency front-end device may support transmitting and receiving Wi-Fi 5G signals and the transmitting processing of N78/79.

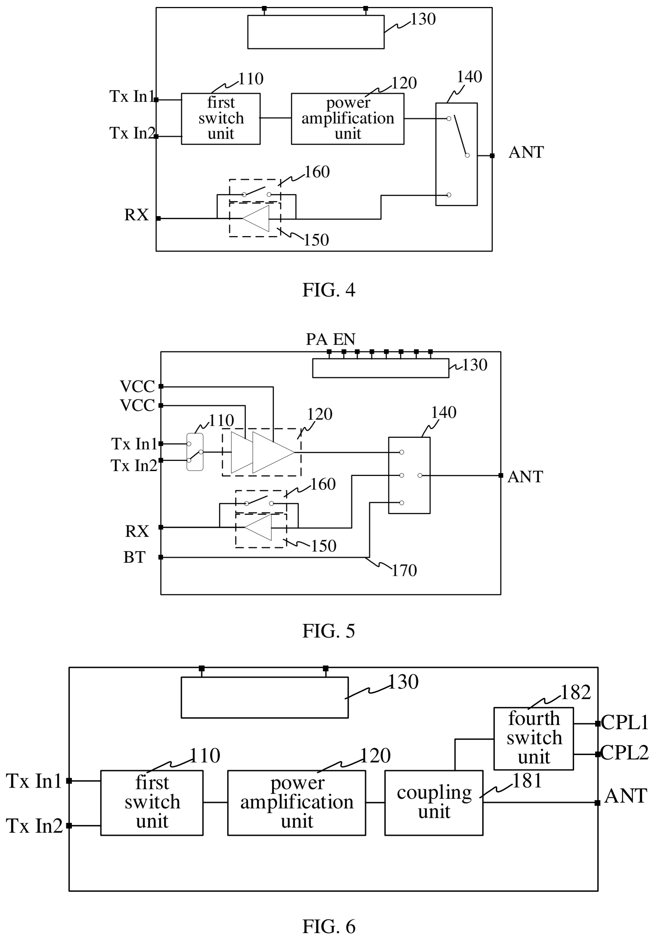

As illustrated in FIG. 4, in some exemplary embodiments, the radio frequency front-end device 10 further includes a bypass switch 160. Specifically, a first terminal of the bypass switch 160 is connected to the input terminal of the low-noise amplification unit 150, and a second terminal of the bypass switch 160 is connected to the output terminal of the low-noise amplification unit 150.

Exemplarily, the bypass switch 160 may be a single-pole single-throw switch.

Exemplarily, the bypass switch 160 may be connected to the control unit 130, and may be in an on or off state under the control of the control unit 130.

The on/off state of the bypass switch 160 may be determined based on a signal strength parameter of the received radio frequency signal. Exemplarily, when the signal strength parameter is greater than or equal to a preset value, the bypass switch 160 may be in the on state; and when the signal strength parameter is lower than the preset value, the bypass switch 160 may be in the off state. Specifically, the signal strength parameter include but is not limited to a reference signal received power (RSRP), a reference signal received quality (RSRQ), or a received signal strength indicator (RSSI). Different signal strength parameters correspond to different preset values, and the preset values may be set based on communication requirements.

When the bypass switch 160 is in the on state, the radio frequency signal received by the antenna terminal ANT is directed by the second switch unit 140 to a branch where the bypass switch 160 is located, and then transmitted to the first output terminal RX without passing through the low-noise amplification unit 150.

When the bypass switch 160 is in the off state, the radio frequency signal received by the antenna terminal ANT is directed by the second switch unit 140 to a branch where the low-noise amplification unit 150 is located, and after being performed with the low-noise amplification processing by the low-noise amplification processing, the processed radio frequency signal is transmitted to the first output terminal RX, and then may be transmitted to the corresponding communication module.

In the embodiments, by providing the bypass switch connected in parallel with the low-noise amplification unit, the bypass switch may be controlled to be in the on state when the signal strength parameter of the received radio frequency signal is greater than or equal to the preset value. This prevents saturation of the radio frequency transceiver that would otherwise be caused due to excessively high received power of the radio frequency signal when there is a large blocking signal, thereby enhancing the security and reliability of the radio frequency front-end device 10. In addition, the bypass switch is controlled to be in the off state when the signal strength parameter of the received radio frequency signal is lower than the preset value, so that the low-noise amplification unit performs low noise amplification processing on the radio frequency signal, thereby improving the receiving performance of receiving the radio frequency signal.

As illustrated in FIG. 5, in some exemplary embodiments, when the second radio frequency signal is a Wi-Fi 2.4G signal, the radio frequency front-end device 10 is further configured with a second output terminal BT. Specifically, the second output terminal BT may be connected to the second communication module 30, and the second communication module 30 may include a WI-FI&BT chip, which may support processing of the second radio frequency signal and a third radio frequency signal. the center frequency of each of the third radio frequency signal and the second radio frequency signal is within a preset range. Exemplarily, the second radio frequency signal is a Wi-Fi 2.4G signal, and the third radio frequency signal includes a Bluetooth signal.

The radio frequency front-end device 10 further includes a through (direct connection, or straight-through) branch. Specifically, a first terminal of the through branch is connected to the second output terminal BT, a second terminal of the through branch is connected to yet another first terminal of the second switch unit 140, and the through branch is configured for transmission of the third radio frequency signal.

The second switch unit 140 may include three first terminals and one second terminal. The multiple first terminals of the second switch unit 140 may be respectively connected to the power amplification unit 120, the low-noise amplification unit 150, and the through branch. The second terminal of the second switch unit 140 is connected to the antenna terminal ANT. As such, the second switch unit 140 may be configured to selectively make the antenna terminal ANT to be conductively connected to one of the power amplification unit 120, the low-noise amplification unit 150, and the through branch.

The radio frequency front-end device according to the embodiments can not only support the transmitting and receiving processing of Wi-Fi 2.4 signals, but also support the transmitting processing of cellular signals, such as N41/B41 or N40/B40, and can further support the receiving processing of Bluetooth signals.

As illustrated in FIG. 6 to FIG. 8, in some exemplary embodiments, the radio frequency front-end device 10 is configured with multiple coupling terminals, for example, the multiple coupling terminals include a first coupling terminal CPL1 and a second coupling terminal CPL2. Specifically, each coupling terminal may be connected to a respective one communication module. Exemplarily, the first coupling terminal CPL1 may be connected to the first communication module 20, and the second coupling terminal CPL2 may be connected to the second communication module 30.

The radio frequency front-end device 10 further includes a coupling unit 181 and a third switch unit 182. Specifically, the coupling unit 181 is disposed on a path between the output terminal of the power amplification unit 120 and the antenna terminal ANT. The coupling unit 181 may be configured to couple a received radio frequency signal, thereby outputting a coupling signal for power detection.

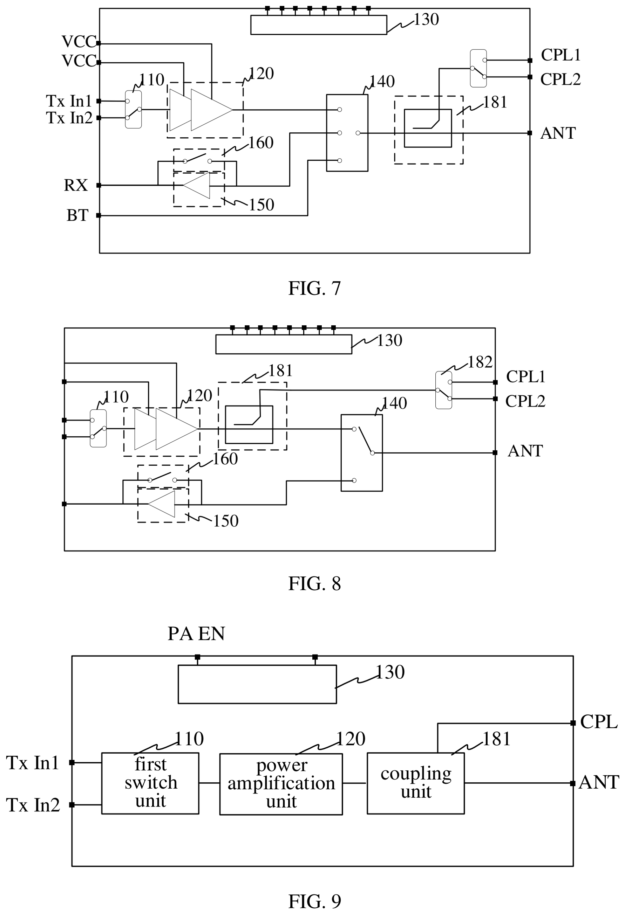

Exemplarily, as illustrated in FIG. 8, when the radio frequency front-end device 10 includes the second switch unit 140, the coupling unit 181 may be disposed on a path between the output terminal of the power amplification unit 120 and the second switch unit 140. Exemplarily, as illustrated in FIG. 7, in some alternative implementations, the coupling unit 181 may be disposed on a path between the second switch unit 140 and the antenna terminal ANT. A specific position of the coupling unit 181 and a connection relationship with other devices are not specifically limited in the embodiments of the disclosure.

The coupling unit 181 may include one of a directional coupler, a bidirectional coupler, and a hybrid coupler. In the embodiments of the disclosure, for convenience of description, it is illustrated by taking a case where the coupling unit 181 includes a directional coupler as an example. Specifically, a directional coupler is typically a four-port network, which includes an input port (port 1), a through port (port 2), a coupling port (port 3), and an isolation port (port 4). When a signal is input into the input port, a part of power is directly output from the through port, another part of the power is coupled to the coupling port for output, and no power is output from the isolation port. Specifically, the input port of the directional coupler may be connected to the output terminal of the power amplification unit 120, the through port of the directional coupler may be configured to connect to the antenna terminal ANT, the coupling port of the directional coupler is connected to the second terminal of the third switch unit 182, and the two first terminals of the third switch unit 182 are connected to the first coupling terminal CPL1 and the second coupling terminal CPL2 respectively. The third switch unit 182 is configured to selectively output a first coupling signal corresponding to the first radio frequency signal or a second coupling signal corresponding to the second radio frequency signal.

Exemplarily, the coupling unit 181 may be configured to couple a part of the power of the received first radio frequency signal, and output the corresponding first coupling signal to the first coupling terminal CPL1 via the third switch unit 182; then, the first coupling signal is transmitted to the first communication module 20. The coupling unit 181 may be further configured to couple a part of the power of the received second radio frequency signal, and output the second coupling signal to the second coupling terminal CPL2 via the third switch unit 182; then, the second coupling signal is transmitted to the second communication module 30.

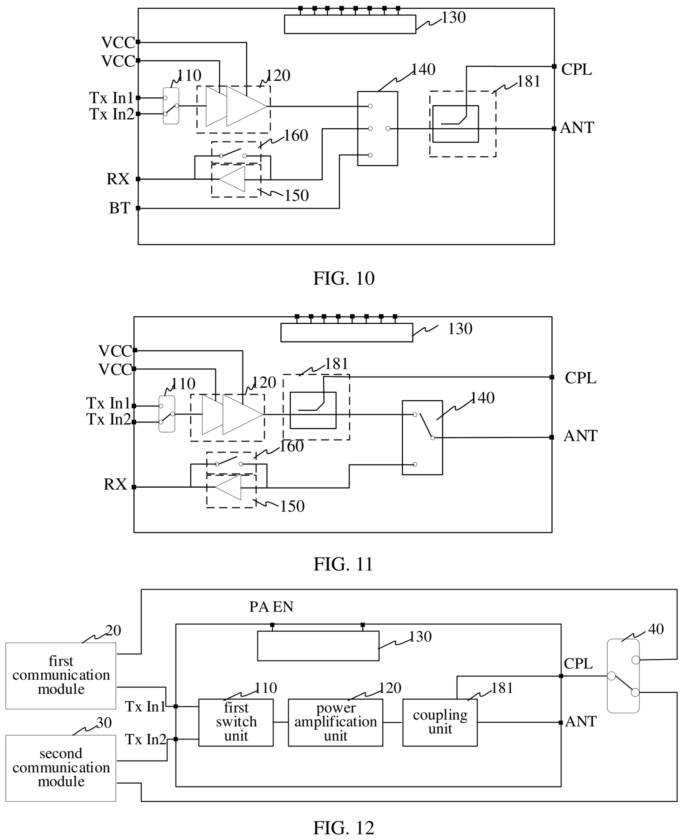

As illustrated in FIG. 9 to FIG. 11, in some exemplary embodiments, differing from the foregoing embodiments, the radio frequency front-end device 10 may be configured with one coupling terminal CPL, and the third switch unit may be located externally to the radio frequency front-end device 10. For distinction, the third switch unit located externally to the radio frequency front-end device 10 is referred to as a second switch module. As illustrated in FIG. 12, in the radio frequency system, a first terminal of the second switch module 40 is connected to the coupling terminal, and two second terminals of the second switch module 40 are connected to the first communication module 20 and the second communication module 30 respectively.

In the above embodiments, the radio frequency front-end device 10 is integrated with the coupling unit 181, which enables the power detection of the received radio frequency signal. The configuration of the coupling unit 181 in FIG. 10 is similar to those illustrated in FIG. 7, and the configuration of the coupling unit 181 in FIG. 11 is similar to those illustrated in FIG. 8. The signal is then transmitted to the corresponding communication module, and the communication module may regulate, based on the feedback, a gain coefficient of the power amplifier of the radio frequency front-end device 10, thereby regulating the power of the radio frequency signal to meet communication requirements.

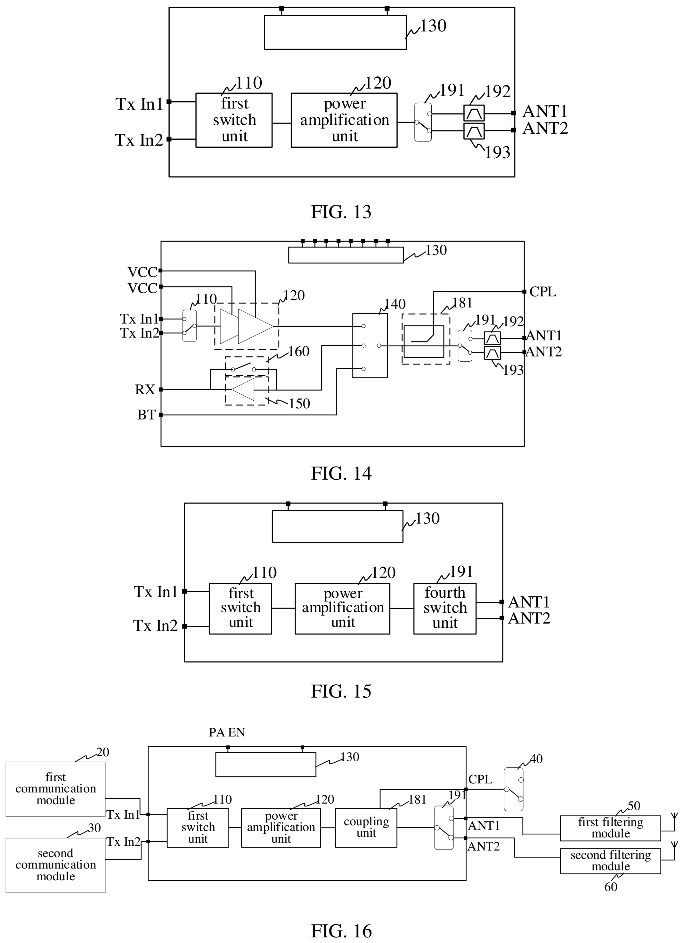

As illustrated in FIG. 13 and FIG. 14, in some exemplary embodiments, differing from the foregoing embodiments, the radio frequency front-end device 10 may be configured with a first antenna terminal ANT1 and a second antenna terminal ANT2. Specifically, the first antenna terminal ANT1 may be connected to a first antenna for supporting the first radio frequency signal, and the second antenna terminal ANT2 may be connected to a second antenna for supporting the second radio frequency signal. The radio frequency front-end device 10 further includes a fourth switch unit 191, a first filter 192, and a second filter 193. Specifically, a first terminal of the fourth switch unit 191 is connected to a first terminal of the first filter 192, another first terminal of the fourth switch unit 191 is connected to a first terminal of the second filter 193, a second terminal of the first filter 192 is connected to the first antenna terminal ANT1, and a second terminal of the second filter 193 is connected to the second antenna terminal ANT2. For example, as illustrated in FIG. 13, a second terminal of the fourth switch unit 191 is connected to the output terminal of the power amplification unit 120. For another example, as illustrated in FIG. 14, when the radio frequency front-end device 10 includes both of the fourth switch unit 191 and the coupling unit 181, the second terminal of the fourth switch unit 191 is connected to the through port of the coupling unit 181.

Exemplarily, the fourth switch unit 191 may be a single-pole multi-throw switch (SPmT, m≥2). In the embodiments of the disclosure, m may be the same as the number of antenna terminals ANT in the radio frequency front-end device 10. For example, the fourth switch unit 191 may be a single-pole double-throw switch.

When the power amplifier of the radio frequency front-end device 10 operates in the first operating mode to support the power amplification of the first radio frequency signal, the fourth switch unit 191 may make the power amplification unit 120 to be conductively connected to the first filter 192 to transmit the first radio frequency signal to the first antenna. When the power amplifier of the radio frequency front-end device 10 operates in the second operating mode to support the power amplification of the second radio frequency signal, the fourth switch unit 191 may make the power amplification unit 120 to be conductively connected to the second filter 193 to transmit the second radio frequency signal to the second antenna.

Exemplarily, each of the first filter 192 and the second filter 193 may be a band-pass filter, a band-stop filter, or a notching filter. The first filter 192 is configured to allow the first radio frequency signal to pass through. For example, processing by the first filter 192 permits the first radio frequency signal to pass through while filtering out all signals other than the first radio frequency signal. The second filter 193 is configured to allow the second radio frequency signal to pass through. For example, processing by the second filter 193 permits the second radio frequency signal to pass through while filtering out all signals other than the second radio frequency signal.

In the embodiments, by integrating the fourth switch unit, the first filter, and the second filter in the radio frequency front-end device, the radio frequency front-end device may configure filtering channels corresponding to the first radio frequency signal and the second radio frequency signal respectively, which can reduce the clutter interference of the first radio frequency signal and the second radio frequency signal, and enable the communication performance of the first radio frequency signal and the second radio frequency signal supported by the radio frequency device. In addition, by integrating the fourth switch unit, the first filter, and the second filter in the radio frequency front-end device, the integration level of the radio frequency front-end device can be further improved, thereby reducing the occupied space of the radio frequency system, which facilitates the miniaturization of the radio frequency system.

As illustrated in FIG. 15, in some exemplary embodiments, the first filter and the second filter may be located externally to the radio frequency front-end device. In this case, two first terminals of the fourth switch unit 191 are connected to the first antenna terminal ANT1 and the second antenna terminal ANT2 respectively, and the second terminal of the fourth switch unit 191 is connected to the output terminal of the power amplification unit 120.

For distinction, the first filter 192 located externally to the radio frequency front-end device 10 is referred to as a first filtering module, and the second filter 193 located externally to the radio frequency front-end device 10 is referred to as a second filtering module. As illustrated in FIG. 16, the radio frequency system may include the first communication module 20, the second communication module 30, the radio frequency front-end device 10, a first filtering module 50, and a second filtering module 60.

A first terminal of the first filtering module 50 is connected to the first antenna terminal ANT1, and a second terminal of the first filtering module 50 is connected to the first antenna. A first terminal of the second filtering module 60 is connected to the second antenna terminal ANT2, and a second terminal of the second filtering module 60 is connected to the second antenna.

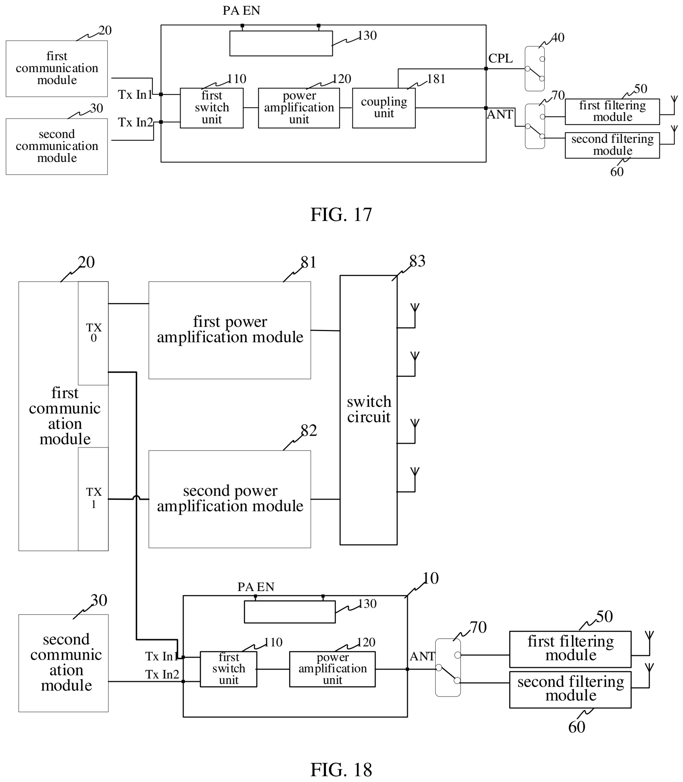

As illustrated in FIG. 17, in some exemplary embodiments, all of the first filter, the second filter, and the fourth switch unit may be located externally to the radio frequency front-end device. For distinction, the fourth switch unit located externally to the radio frequency front-end device is referred to as a first switch module. That is, the radio frequency system may include the first communication module 20, the second communication module 30, the radio frequency front-end device 10, a first switch module 70, the first filtering module 50, and the second filtering module 60.

For the first switch module 70, the first filtering module 50, and the second filtering module 60 that are located externally to the radio frequency front-end device 10, reference may be made to the fourth switch unit 191, the first filter 192, and the second filter 193 that are located within the radio frequency front-end device 10 in the foregoing embodiments, and the details will not be repeated here.

The radio frequency system according to the above embodiments includes the first switch module, the first filtering module, and the second filtering module, by which filtering channels may be configured for the first radio frequency signal and the second radio frequency signal respectively. In this way, the clutter interference of the first radio frequency signal and the second radio frequency signal can be reduced, thereby providing the communication performance of the first radio frequency signal and the second radio frequency signal supported by the radio frequency device.

As illustrated in FIG. 18, in some exemplary embodiments, the first communication module 20 includes at least a first transmitting channel TX0 and a second transmitting channel TX1. The first transmitting channel TX0 and the second transmitting channel TX1 may be configured to provide radio frequency signals (e.g., cellular signals) of different frequency bands.

The first transmitting channel TX0 includes a first transmitting terminal for outputting the first radio frequency signal and at least one second transmitting terminal for outputting a fourth radio frequency signal. The fourth radio frequency signal and the first radio frequency signal are in different frequency bands.

Exemplarily, the first transmitting terminal may be a high frequency transmitting terminal for transmitting high-frequency signals (e.g., N41/B41). Alternatively, the first transmitting terminal may be an ultra-high frequency transmitting terminal for transmitting ultra-high-frequency signals (e.g., N79).

The second transmitting terminal may include at least one of a low frequency transmitting terminal and an intermediate frequency transmitting terminal. The low frequency transmitting terminal is configured to transmit low frequency signals, and the intermediate frequency transmitting terminal may be configured to transmit intermediate frequency signals.

The second transmitting channel TX1 includes a third transmitting terminal for outputting the first radio frequency signal. Exemplarily, the third transmitting terminal may be an intermediate frequency transmitting terminal or an ultra-high frequency transmitting terminal. The type of the third transmitting terminal is the same as the type of the first transmitting terminal.

Specifically, the radio frequency system includes the first communication module 20, the second communication module 30, a first power amplification module 81, a second power amplification module 82, and the radio frequency front-end device 10 according to any of the foregoing embodiments.

An input terminal of the first power amplification module 81 is connected to each second transmitting terminal, and an output terminal of the first power amplification module 81 is connected to an antenna. The first power amplification module 81 is configured to perform power amplification processing on a received signal.

An input terminal of the second power amplification module 82 is connected to each third transmitting terminal, and an output terminal of the second power amplification module 82 is connected to an antenna. The second power amplification module 82 is configured to perform power amplification processing on a received signal.

Exemplarily, the first power amplification module 81 and the second power amplification module 82 may include an MMPA, a PA Mid device, and an L-PA Mid device, etc. In other words, the first power amplification module 81 and the second power amplification module 82 may at least include a power amplifier, to support power amplification processing of different radio frequency signals. Exemplarily, the first power amplification module 81 and the second power amplification module 82 may further include a radio frequency device such as a low-noise amplifier, a filter, and a duplexer, so that the first power amplification module 81 and the second power amplification module 82 may not only support power amplification processing of received radio frequency signals, but also support low-noise amplification processing and filtering processing of received radio frequency signals.

It is notable that the first power amplification module 81 and the second power amplification module 82 are not limited to the above examples.

In some exemplary embodiments, the radio frequency system may further include a switch circuit 83. Multiple first terminals of the switch circuit 83 may be connected to the first power amplification module 81 and the second amplification module respectively, and the multiple second terminals of the switch circuit 83 may be connected to multiple antennas respectively. The switch circuit 83 may selectively make any power amplification module to be conductively connected to any antenna, so that the radio frequency system can support the switching of different radio frequency signals among different antennas. In this way, the switching flexibility of the multiple antennas in the radio frequency system can be improved, which further improves the communication performance.

In the embodiments of the disclosure, the radio frequency system can support a dual transmission of any radio frequency signal supported by the first transmitting channel and any radio frequency signal supported by the second transmitting channel. This enables dual transmission of various combinations of different frequency bands, so that the radio frequency system can be applicable to dual-connection modes such as an NSA mode, a DSDA mode, and a UL CA mode. In addition, the radio frequency system can further support dual transmission of the first radio frequency signal. Specifically, a first transmitting link passes through the second transmitting channel and the second power amplification module to a corresponding antenna, and a second transmitting link passes through the first transmitting channel, the first switch unit and the power amplification unit of the radio frequency front-end device to a corresponding antenna. As such, there is no need for an additional power amplification module for amplifying the first radio frequency signal, since the power amplification unit of the radio frequency front-end device can be directly reused, which can reduce the cost of the radio frequency system.

In some exemplary embodiments, the fourth radio frequency signal includes a first sub-signal and a second sub-signal. Specifically, the first transmitting channel TX0 includes two second transmitting terminals, one of the two second transmitting terminals is configured to output the first sub-signal, and the other one of the two second transmitting terminal is configured to output the second sub-signal. Exemplarily, the two second transmitting terminals may include a low frequency transmitting terminal and an intermediate frequency transmitting terminal, the first sub-signal is a low frequency signal, and the second sub-signal is an intermediate frequency signal.

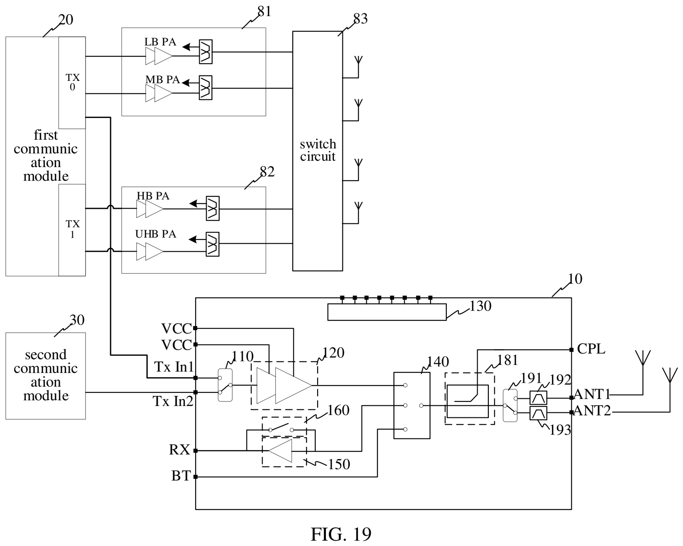

As illustrated in FIG. 19, exemplarily, the first power amplification module 81 may include a low frequency power amplifier for supporting low frequency signals, an intermediate frequency power amplifier for supporting intermediate frequency signals, and the like.

The second transmitting channel TX1 may include a third transmitting terminal and a fourth transmitting terminal. Exemplarily, one of the third transmitting terminal and the fourth transmitting terminal is a high frequency transmitting terminal for transmitting high frequency signals, and the other of the third transmitting terminal and the fourth transmitting terminal may be an ultra-high frequency transmitting terminal for transmitting ultra-high frequency signals.

Please continue to refer to FIG. 19, in some exemplary embodiments, a case where the first radio frequency channel includes a low frequency transmitting terminal, an intermediate frequency transmitting terminal, and a high frequency transmitting terminal, the second radio frequency channel includes a high frequency transmitting terminal and an ultra-high frequency transmitting terminal, and the radio frequency front-end device 10 is a 2.4G Wi-Fi radio frequency front-end device 10 is taken as an example for convenience of description.

The low frequency transmitting terminal and the intermediate frequency transmitting terminal of the first radio frequency channel each are connected to the first power amplification module 81, and may output a low frequency signal and an intermediate frequency signal to the first power amplification module 81 respectively. After being performed with power amplification processing by the first power amplification module 81, the low frequency signal or the intermediate frequency signal is then transmitted to a corresponding antenna, thereby enabling the transmitting of the low frequency signal and the intermediate frequency signal.

The high frequency transmitting terminal of the first radio frequency channel is connected to the first input terminal of the radio frequency front-end device 10. The output high frequency signal may be directed to the power amplification unit 120 through switching by the first switch unit 110, the received high frequency signal is performed with the power amplification, and then transmitted to a corresponding antenna, thereby enabling the transmitting of the high-frequency signal.

Exemplarily, the radio frequency front-end device 10 may support the power amplification of high frequency signals and Wi-Fi 2.4G signals. The radio frequency front-end device 10 may receive a first control signal (for example, a MIPI signal) from the first communication module 20, and the radio frequency front-end device 10 controls, based on the received first control signal, the power amplification unit 120 to operate in the first operating mode, so as to support the power amplification of the high-frequency signal. The high frequency signal that has been performed with the power amplification may be transmitted to the corresponding antenna.

The high frequency transmitting terminal and the ultra-high frequency transmitting terminal of the second radio frequency channel each are connected to the second power amplification module 82, and may output a high frequency signal and an ultra-high frequency signal to the second power amplification module 82 respectively. The high frequency signal or the ultra-high frequency signal is performed with the power amplification by the second power amplification module 82, and then transmitted to a corresponding antenna, thereby enabling the transmitting of the high-frequency signal and the ultra-high frequency signal.

The radio frequency system according to the embodiments can support the simultaneous transmission (i.e., dual transmission) of any radio frequency signal (LB, MB, or HB) provided by the first radio frequency channel and any radio frequency signal (HB or UHB) provided by the second radio frequency channel. For example, the radio frequency system can realize dual transmission of LB+HB, LB+UHB, MB+HB, MB+UHB, HB+HB (e.g., N41+N41), and HB+UHB (e.g., N41+N78, and N41+N79). The radio frequency system may support communication scenarios of dual-path transmission such as dual-card dual-standby DSDA and ENDC. When supporting dual transmission of HB+HB and HB+UHB, the radio frequency system does not need to additionally set a power amplification module for supporting high frequency signals, and may directly reuse the power amplification unit of the Wi-Fi 2.4G radio frequency front-end device. Thus, the cost and the occupied area of the radio frequency system can be further reduced.

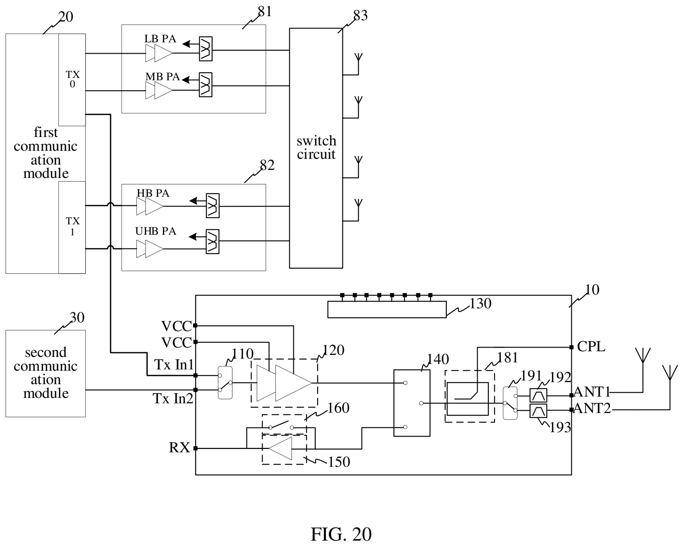

As illustrated in FIG. 20, in some exemplary embodiments, a case where the first radio frequency channel includes a low frequency transmitting terminal, an intermediate frequency transmitting terminal, and an ultra-high frequency transmitting terminal, the second radio frequency channel includes a high frequency transmitting terminal and an ultra-high frequency transmitting terminal, and the radio frequency front-end device 10 is a 5G Wi-Fi radio frequency front-end device 10 is taken as an example for convenience of description.

The low frequency transmitting terminal and the intermediate frequency transmitting terminal of the first radio frequency channel each are connected to the first power amplification module 81, and may output a low frequency signal and an intermediate frequency signal to the first power amplification module 81 respectively. The low frequency signal or the intermediate-frequency signal is performed with power amplification processing by the first power amplification module 81, and then may be transmitted to a corresponding antenna, thereby enabling the transmitting of the low-frequency signal and the intermediate-frequency signal.

The ultra-high frequency transmitting terminal of the first radio frequency channel is connected to the first input terminal of the radio frequency front-end device 10. The output ultra-high frequency signal may be directed to the power amplification unit 120 through switching by the first switch unit 110, so that the received high frequency signal is performed with power amplification, and then transmitted to a corresponding antenna to support transmitting the high frequency signal.

Exemplarily, the radio frequency front-end device 10 may support the power amplification of ultra-high frequency signals and Wi-Fi 5G signals. The radio frequency front-end device 10 may receive a first control signal (for example, a MIPI signal) from the first communication module 20, and control, based on the received first control signal, the power amplification unit 120 to operate in the first operating model, thereby supporting the power amplification of the ultra-high frequency signal. The ultra-high frequency signal that has been performed with the power amplification may be transmitted to the corresponding antenna.

The high frequency transmitting terminal and the ultra-high frequency transmitting terminal of the second radio frequency channel each are connected to the second power amplification module 82 respectively, and may output a high frequency signal and an ultra-high frequency signal to the second power amplification module 82 respectively. The high frequency signal and the ultra-high frequency signal are performed with power amplification processing by the second power amplification module 82, and then may be transmitted to the corresponding antennas, thereby enabling the transmitting of the high frequency signal and the ultra-high frequency signal.

The radio frequency system according to the embodiments can support the simultaneous transmission (i.e., dual transmission) of any radio frequency signal (LB, MB, or UHB) provided by the first radio frequency channel and any radio frequency signal (HB or UHB) provided by the second radio frequency channel. For example, the radio frequency system can realize dual transmission of LB+HB, LB+UHB, MB+HB, MB+UHB, UHB+HB (for example, N41+N79), and UHB+UHB (for example, n79+n79). The radio frequency system can support communication scenarios of dual-path transmission such as dual-card dual-standby DSDA and ENDC. When supporting dual transmission of UHB+HB and UHB+UHB, the radio frequency system does not need to additionally set a power amplification module for supporting ultra-high frequency signals, and may directly reuse the power amplification unit of the Wi-Fi 5G radio frequency front-end device. Thus, the cost and occupied area of the radio frequency system can be further reduced.

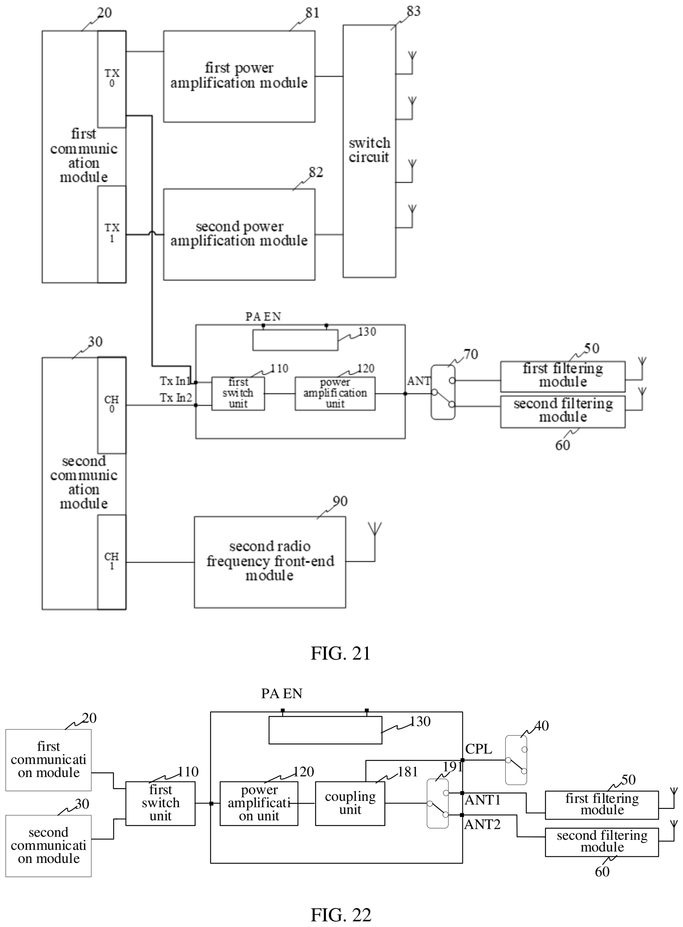

As illustrated in FIG. 21, in some exemplary embodiments, the second communication module 30 includes at least one radio frequency channel supporting the second radio frequency signal. Specifically, the second input terminal of the radio frequency front-end device 10 is connected to one of the at least one radio frequency channel.

Exemplarily, the second communication module 30 may include a first radio frequency channel CH0 and a second radio frequency channel CH1, and the first radio frequency channel CH0 is connected to the second input terminal of the radio frequency front-end device 10.

The radio frequency system may further include a radio frequency front-end module 90. The radio frequency front-end module 90 may be connected to the second radio frequency channel CH1 to support the second radio frequency signal. For example, the second radio frequency channel CH1 may provide the second radio frequency signal to the second radio frequency front-end module 90, and the second radio frequency front-end module 90 may support transmitting the received second radio frequency signal, or support transmitting and receiving the received second radio frequency signal.

In the embodiments, when the power amplification unit of the radio frequency front-end device operates in the first operating mode to support the power amplification of the first radio frequency signal, the second radio frequency channel and the second radio frequency front-end module 90 of the radio frequency system may support the second radio frequency signal (e.g., a Wi-Fi 2.4G signal or a Wi-Fi 5G signal), which enables the radio frequency system to realize the dual transmission of the first radio frequency signal and the second radio frequency signal. In addition, based on a combination of the first communication module, the first power amplification module, and the second power amplification module, the radio frequency system is also enabled to realize coexistence of multiple cellular signals and Wi-Fi signals. When the power amplification unit of the radio frequency front-end device operates in the second operating mode to support the power amplification of the second radio frequency signal, the second radio frequency channel and the radio frequency front-end module of the radio frequency system may support the second radio frequency signal (e.g., a Wi-Fi 2.4G signal or a Wi-Fi 5G signal). The radio frequency system may support the dual transmission and dual reception of the second radio frequency signal, such as 2*2 MIMO of the second radio frequency signal, which can improve the throughput of the radio frequency system supporting the second radio frequency signal.

In some exemplary embodiments, the embodiments of the disclosure provides an electronic device, which may include the radio frequency system according to any of the foregoing embodiments. Exemplarily, the electronic device may specifically be a user equipment (UE), an access terminal, a terminal unit, a terminal station, a mobile station, a remote station, a remote terminal, a mobile device, a wireless communication device, a terminal agent, or a terminal apparatus, etc. An access terminal may be a cellular phone, a cordless phone, a Session Initiation Protocol (SIP) phone, a Wireless Local Loop (WLL) station, a Personal Digital Assistant (PDA), a mobile phone, a computer, a laptop computer, a handheld computing device (e.g., a tablet), and other devices for communicating on a wireless system.

As illustrated in FIG. 22, in some exemplary embodiments, when the radio frequency front-end device 10 according to any of the foregoing embodiments is implemented in the radio frequency system, the first switch unit 110 in the radio frequency front-end device 10 may be arranged externally to the radio frequency front-end device 10, that is, the first switch unit 110 may be disposed outside the radio frequency front-end device 10 and not integrated in the radio frequency front-end device 10.

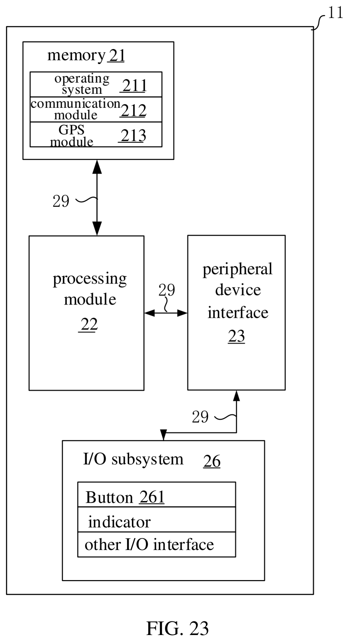

As illustrated in FIG. 23, it is further described by taking the electronic device 11 being a mobile phone as an example. Specifically, as illustrated in FIG. 23, the mobile phone may include a memory 21 (which optionally includes one or more computer-readable storage media), a processing module 22, a peripheral interface 23, and an input/output (I/O) subsystem 26. These components optionally communicate through one or more communication buses or signal lines 29. A person skilled in the art may understand that the structure of the mobile phone illustrated in FIG. 23 does not constitute a limitation on the mobile phone, and the mobile phone may include more or fewer components than those shown in the figure, or combine some components, or have different component arrangements. The various components shown in FIG. 23 are implemented in hardware, software, or a combination of hardware and software, including one or more signal processing circuits and/or application-specific integrated circuits.

The memory 21 optionally includes a high-speed random access memory and optionally further includes a non-volatile memory, such as one or more of a magnetic disk storage device, a flash memory device, or another non-volatile solid-state memory device. Exemplarily, software components stored in the memory 21 include an operating system 211, a communication module (or an instruction set) 212, a global positioning system (GPS) module (or an instruction set) 213, etc.

The processing module 22 and other control circuits (such as a processing circuit in the electronic device) may be configured to control the operations of the mobile phone. The processing module 22 may include one or more of a microprocessor, a microcontroller, a digital signal processor, a baseband processor, a power management unit, an audio codec chip, an application-specific integrated circuit, and the like.

The processing module 22 may be configured to implement a control algorithm for controlling the use of antennas in the mobile phone. The processing module 22 may be further configured to issue control commands for controlling various switches in the electronic device 11, etc.

The I/O subsystem 26 is configured to couple input/output peripherals on the mobile phone, such as a keypad and other input control devices, to the peripheral interface 23. The I/O subsystem 26 optionally includes a touch screen, keys, a tone generator, an accelerometer (motion sensor), an ambient light sensor and other sensors, a light-emitting diode and other status indicators, a data port, and the like. Exemplarily, a user may control the operation of the mobile phone by providing commands via the I/O subsystem 26, and may use the output resources of the I/O subsystem 26 to receive status information and other outputs from the mobile phone. For example, a user may press a button 261 to activate the mobile phone or turn off the mobile phone.

The various technical features of the above-described embodiments may be combined arbitrarily. To make the description concise, not all possible combinations of the various technical features in the embodiments are described. However, the combinations of these technical features without contradiction shall fall within the scope of this specification.

The foregoing embodiments show only several implementations of this disclosure and are described in detail, which however are not to be construed as a limitation to the scope of this disclosure. It is notable that, for a person skilled in the art, several modifications and improvements can be made without departing from the idea of this disclosure, but all fall within the protection scope of this disclosure. Therefore, the protection scope of the disclosure should be subject to the appended claims.

## Claims

1. A radio frequency front-end device (10), wherein the radio frequency front-end device (10) is configured with an antenna terminal (ANT), a control terminal (PA EN) for receiving a plurality of control signals, and a plurality of input terminals (Tx In1, Tx In2) for receiving a plurality of radio frequency signals; and the radio frequency front-end device (10) comprises:
a first switch unit (110), wherein a plurality of first terminals of the first switch unit (110) are connected to the plurality of input terminals (Tx In1, Tx In2) respectively;
a power amplification unit (120), wherein an input terminal of the power amplification unit (120) is connected to a second terminal of the first switch unit (110), and an output terminal of the power amplification unit (120) is connected to the antenna terminal (ANT); and
a control unit (130), wherein the control unit (130) is connected to each of the control terminal (PA EN) and the power amplification unit (120), and the control unit (130) is configured to control, based on a received target control signal, the power amplification unit (120) to perform power amplification processing on a received target radio frequency signal; the target control signal is one of the plurality of control signals, and frequency bands of the plurality of radio frequency signals are different.

2. The radio frequency front-end device (10) as claimed in claim 1, wherein the radio frequency front-end device (10) is further configured with a first output terminal (RX), and the radio frequency front-end device (10) further comprises:
a second switch unit (140), wherein a first terminal of the second switch unit (140) is connected to the output terminal of the power amplification unit (120), and a second terminal of the second switch unit (140) is connected to the antenna terminal (ANT); and
a low-noise amplification unit (150), wherein an input terminal of the low-noise amplification unit (150) is connected to another first terminal of the second switch unit (140), and an output terminal of the low-noise amplification unit (150) is connected to the first output terminal (RX).

3. The radio frequency front-end device (10) as claimed in claim 2, further comprising:
a bypass switch (160), wherein a first terminal of the bypass switch (160) is connected to the input terminal of the low-noise amplification unit (150), and a second terminal of the bypass switch (160) is connected to the output terminal of the low-noise amplification unit (150).

4. The radio frequency front-end device (10) as claimed in claim 2 or claim 3, wherein the radio frequency front-end device (10) is further configured with a second output terminal (BT), and the radio frequency front-end device (10) further comprises:
a through branch, wherein a first terminal of the through branch is connected to the second output terminal (BT); and
a second terminal of the through branch is connected to yet another first terminal of the second switch unit (140).

5. The radio frequency front-end device (10) as claimed in claim 4, wherein a radio frequency signal received by the low-noise amplification unit (150) comprises a Wi-Fi 2.4G signal, and a radio frequency signal transferred by the through branch comprises a Bluetooth signal.

6. The radio frequency front-end device (10) as claimed in any one of claims 1 to 5, wherein the radio frequency front-end device (10) is further configured with a coupling terminal, and the radio frequency front-end device (10) further comprises:
a coupling unit (181), provided on a path between the output terminal of the power amplification unit (120) and the antenna terminal (ANT);
preferably, the coupling terminal comprises a first coupling terminal (CPL1) and a second coupling terminal (CPL2), and the radio frequency front-end device (10) further comprises:
a third switch unit (182), wherein a plurality of first terminals of the third switch unit (182) are connected to the first coupling terminal (CPL1) and the second coupling terminal (CPL2) respectively, a second terminal of the third switch unit (182) is connected to a coupling output terminal of the coupling unit (181), and the third switch unit (182) is configured to select one of coupling signals corresponding to the plurality of radio frequency signals for output.

7. The radio frequency front-end device (10) as claimed in any one of claims 1 to 6, wherein the antenna terminal (ANT) comprises a first antenna terminal (ANT1) and a second antenna terminal (ANT2), and the radio frequency front-end device (10) further comprises:
a fourth switch unit (191), wherein two first terminals of the fourth switch unit (191) are connected to the first antenna terminal (ANT1) and the second antenna terminal (ANT2) respectively, and a second terminal of the fourth switch unit (191) is connected to the output terminal of the power amplification unit (120);
preferably, the plurality of input terminals (Tx In1, Tx In2) comprises a first input terminal (Tx In1) for receiving a first radio frequency signal and a second input terminal (Tx In2) for receiving a second radio frequency signal, and the radio frequency front-end device (10) further comprises:
a first filter (192), wherein the first filter (192) is connected to each of one of the two first terminal of the fourth switch unit (191) and the first antenna terminal (ANT1), and the first filter (192) is configured to allow the first radio frequency signal to pass through; and
a second filter (193), wherein the second filter (193) is connected to each of the other one of the two first terminal of the fourth switch unit (191) and the second antenna terminal (ANT2), and the second filter (193) is configured to allow the second radio frequency signal to pass through.

8. The radio frequency front-end device (10) as claimed in any one of claims 1 to 7, wherein the plurality of input terminals (Tx In1, Tx In2) comprises a first input terminal (Tx In1) for receiving a first radio frequency signal and a second input terminal (Tx In2) for receiving a second radio frequency signal; and
the first radio frequency signal is an N79 or N78 signal, and the second radio frequency signal is a Wi-Fi 5G signal; or
the first radio frequency signal is an N41 or B41 signal, and the second radio frequency signal is a Wi-Fi 2.4G signal or a Bluetooth signal.

9. A radio frequency system, comprising:
a first communication module (20), configured to provide a first control signal and a first radio frequency signal;
a second communication module (30), configured to provide a second control signal and a second radio frequency signal; and
the radio frequency front-end device (10) as claimed in any one of claims 1 to 8, wherein each of a first input terminal (Tx In1) and a first control terminal of the radio frequency front-end device (10) is connected to the first communication module (20), and each of a second input terminal (Tx In2) and a second control terminal of the radio frequency front-end device (10) is connected to the second communication module (30).

10. The radio frequency system as claimed in claim 9, wherein the first communication module (20) comprises:
a first transmitting channel (TX0), wherein the first transmitting channel (TX0) comprises a first transmitting terminal and at least one second transmitting terminal, the first transmitting terminal is configured to output the first radio frequency signal, and the second transmitting terminal is configured to output a fourth radio frequency signal, the fourth radio frequency signal and the first radio frequency signal being in different frequency bands; and
a second transmitting channel (TX1), comprising a third transmitting terminal for outputting the first radio frequency signal;
wherein the radio frequency system further comprises:
a first power amplification module, wherein the first power amplification module is connected to each of the at least one second transmitting terminal, and is configured to perform power amplification processing on a received signal; and
a second power amplification module, wherein the second power amplification module is connected to each of the third transmitting terminal, and is configured to perform power amplification processing on a received signal.

11. The radio frequency system as claimed in claim 10, wherein the fourth radio frequency signal comprises a first sub-signal and a second sub-signal;
the first transmitting channel (TX0) comprises two second transmitting terminals, one of the two second transmitting terminals is configured to output the first sub-signal, and the other one of the two second transmitting terminals is configured to output the second sub-signal; and
the second transmitting channel (TX1) further comprises a fourth transmitting terminal for outputting a fifth radio frequency signal;
the first sub-signal, the second sub-signal, and the fifth radio frequency signal being in different frequency bands;
preferably, wherein the first sub-signal is a low frequency signal, the second sub-signal is an intermediate frequency signal, one of the first radio frequency signal and the fifth radio frequency signal is a high frequency signal, and the other one of the first radio frequency signal and the fifth radio frequency signal is an ultra-high frequency signal.

12. The radio frequency system as claimed in any one of claims 9 to 11, wherein the radio frequency system further comprises a second radio frequency front-end module (90) for supporting the second radio frequency signal, and the second communication module (30) comprises:
a first radio frequency channel (CH0), connected to the second input terminal (Tx In2) of the radio frequency front-end device (10); and
a second radio frequency channel (CH1), wherein the second radio frequency channel (CH1) is connected to the second radio frequency front-end module (90), and is configured to output the second radio frequency signal to the second radio frequency front-end module (90).

13. The radio frequency system as claimed in any one of claims 9 to 12, wherein when the radio frequency front-end device (10) is not integrated with a first filter (192) and a second filter (193), the radio frequency system further comprises:
a first filtering module (50), wherein a first terminal of the first filtering module (50) is connected to a first antenna terminal (ANT1) of the radio frequency front-end device (10), and a second terminal of the first filtering module (50) is connected to a first antenna, and the first filtering module (50) is configured to allow the first radio frequency signal to pass through; and
a second filtering module (60), wherein a first terminal of the second filtering module (60) is connected to a second antenna terminal (ANT2) of the radio frequency front-end device (10), and a second terminal of the second filtering module (60) is connected to a second antenna, and the second filtering module (60) is configured to allow the second radio frequency signal to pass through;
preferably, when the radio frequency front-end device (10) is not integrated with a fourth switch unit (191), the radio frequency system further comprises:
a first switch module (70), wherein a first terminal of the first switch module (70) is connected to the antenna terminal (ANT) of the radio frequency front-end device (10), and two second terminals of the first switch module are connected to the first filtering module (50) and the second filtering module (60) respectively.

14. The radio frequency system as claimed in claim 9, wherein when the radio frequency front-end device (10) is not integrated with a third switch unit (182), the radio frequency system further comprises:
a second switch module (40), wherein a first terminal of the second switch module (40) is connected to a coupling terminal of the radio frequency front-end device (10), a second terminal of the second switch module (40) is connected to the first communication module (20), and another second terminal of the second switch module (40) is connected to the second communication module (30).

15. An electric device (11), comprising the radio frequency system as claimed in any one of claims 9 to 14.
